# FASCICULE DE BREVET EUROPEEN

(11) **EP 3 003 775 B1**
(45) Date de publication et mention de la délivrance du brevet: **13.10.2021**
(21) Numéro de dépôt: 14737280.9
(22) Date de dépôt: 21.05.2014
(51) Int. Cl.: B60N 2/07, B64D 11/06

(54) **DISPOSITIF DE PROTECTION, A DIMENSIONS MODULABLES, POUR RAIL D'ANCRAGE D'EQUIPEMENT**
SCHUTZVORRICHTUNG MIT MODULIERBAREN ABMESSUNGEN FÜR EINE AUSRÜSTUNGSVERANKERUNGSSCHIENE
PROTECTION DEVICE WITH MODULABLE DIMENSIONS FOR AN EQUIPMENT ANCHORING RAIL

(30) Priorité: 24.05.2013 FR 1301185; 25.03.2014 FR 1400722
(43) Date de publication de la demande: 13.04.2016
(73) Titulaire: Daouk, Antar, 75016 Paris (FR)
(72) Inventeur: Daouk, Antar, 75016 Paris (FR)
(74) Mandataire: Weber, Jean-François
(86) Numéro de dépôt international: PCT/FR2014/000111
(87) Numéro de publication internationale: WO 2014/188087

(56) Documents cités:
- US-A1- 2004 222 260
- US-A1- 2005 247 820
- US-A1- 2006 097 109

## Description

La présente invention concerne un dispositif de protection de rail à dimensions modulables, pour rail d'ancrage d'équipement dans un moyen de transport pouvant être un aéronef.

Les dispositifs de protection de rail existants sont en général composés de tronçons de profilé coupés selon les dimensions des intervalles prédéterminés à protéger. Ces dispositifs ne sont pas modulables et deviennent inutilisables en cas de modification de la longueur de la portion de rail à couvrir. Lors de modification d'espace à protéger, il faut alors soit découper de nouveaux dispositifs à la bonne mesure soit rajouter ou retirer des éléments de profilé ce qui nécessite un retour en atelier et nuit à l'efficacité de la fonction de protection du rail car les ajouts et les retraits d'éléments compromettent la protection aux agressions.

Le document US-2005/247820 A divulgue le préambule de la revendication 1.

La présente invention permet de remédier à ces inconvénients car ce dispositif de protection peut être allongé ou raccourci à volonté afin qu'il s'adapte avec précision à la portion de rail à protéger sans avoir à ajouter ou retirer un élément ou à installer un nouveau dispositif taillé à la bonne dimension.

Ce dispositif, dont les dimensions sont modulables à volonté, est un dispositif qui fait gagner du temps car sa modularité à la demande se fait sur place rapidement. Il est réutilisable autant de fois que souhaité de par les mécanismes d'installation et de désinstallation décrits ci-après.

Une fois réglé à la dimension souhaitée, ce dispositif garantit contre toute agression la protection de la portion de rail sur lequel il est installé. Ce dispositif peut être préréglé avant son installation dans le rail selon des informations de dimensions portées sur une de ses faces pour guider l'opérateur.

Un avantage de ce dispositif est que ses dimensions sont modulables à volonté quelle que soit la longueur de rail à protéger et qu'il est donc réutilisable à souhait tout en conservant son intégrité et ses propriétés.

Pour protéger efficacement la portion de rail entre deux points d'ancrage d'un équipement, il faut pouvoir s'adapter avec précision à l'intervalle entre ces deux points qui peut être variable.

Un autre avantage de ce dispositif est justement de s'adapter à l'intervalle entre les deux points d'ancrage de l'équipement car ce dispositif est extensible en fonction de la portion de rail à protéger.

Un autre avantage de ce dispositif est qu'il se fixe dans le rail quel que soit l'endroit du rail et se bride pour son maintien en place.

Encore un avantage de ce dispositif est qu'il peut être préréglé à une longueur donnée et servir de ce fait de butée ou d'élément de mesure pour déterminer un intervalle en vue de la fixation d'autres équipements à intervalles souhaités dans le rail.

Ce dispositif peut être fixé de manière amovible ou permanente et/ou d'une manière articulée à des équipements et une fois sa longueur réglée, peut être positionné dans le rail pour servir de butée pour l'équipement suivant devant être installé dans le rail.

Ce dispositif, éventuellement préréglé, et dans le cas où il est fixé de manière permanente à un des équipements, peut, lorsqu'il est positionné sur le rail, être verrouillé par l'équipement qui vient le chevaucher.

Ce préréglage peut permettre d'utiliser ce dispositif de protection de rail, alors qu'il est déjà placé dans le rail et ce sans qu'il soit borné par des points d'ancrage, comme un gabarit ou une butée pour des équipements qui seraient à fixer selon des intervalles souhaités.

Ce dispositif est conçu de manière à se maintenir dans le rail en toute sécurité.

Ce dispositif de protection de rail peut être composé d'un ou plusieurs éléments reliés les uns aux autres de manière à être imperdables et assurer, quel que soit leur niveau de déploiement, son verrouillage pouvant être par auto verrouillage dans le rail par le seul déploiement des éléments et assurer toutes les fonctions de protection du rail contre tout type d'agression. Au moins un élément, intégrant un ou plusieurs éléments pouvant par exemple se déployer en liaison l'un avec l'autre, dont au moins un élément est en contact avec la gorge du rail de manière à s'insérer par exemple dans les demi-alvéoles d'un rail pouvant être du type avion et de pouvoir se fixer au moyen d'au moins un point d'accrochage en un ou plusieurs endroits de la portion de rail à protéger.

La partie plongeante dans la gorge du rail type avion peut être composée d'un ou plusieurs sous-ensembles pouvant épouser la forme des alvéoles du rail et/ou la gorge interne du rail.

Un ou plusieurs éléments du dispositif de protection peuvent se chevaucher et coulisser, au travers de gorges réciproques, pour recouvrir les espaces apparents du rail afin de les protéger des agressions.

Ces éléments coulissants sont gradués pour délivrer des informations relatives aux dimensions souhaitées et assurer un réglage avant d'être installés sur le rail.

Dans ce cas le dispositif de protection sert également de gabarit pour les intervalles souhaités.

Ces éléments coulissants, gradués, agissent sur le système de bridage du dispositif de protection dans le rail, de par le mouvement appliqué, au travers de pions installés sur le dispositif.

Dans le but de sécuriser le déploiement des éléments coulissants, un système de verrouillage amovible ou non, pouvant être un système de commande à distance, situé à au moins une extrémité du dispositif de protection, maintient en place le dispositif dans le rail.

Dans une forme particulière de l'invention, le dispositif de protection pour rail est composé de :
deux éléments (A, B), se déployant en liaison l'un avec l'autre, dont au moins un élément est en contact avec la gorge (r1) du rail (R) de manière à s'insérer dans les alvéoles (3, 3') du rail (R), et de pouvoir se fixer au moyen d'au moins un point d'ancrage (4, 5, 6, 7) en un ou plusieurs endroits de la portion de rail (R) à protéger.

Le dispositif est composé d'un élément fixe (A) et d'un élément mobile (B), pouvant rester solidaires.

L'élément (A) est composé à une extrémité de sa partie inférieure d'un pion (4) s'insérant dans l'alvéole (3, 3') du rail (R) et d'une ou plusieurs pièces (5) s'insérant dans l'intervalle (8) compris entre deux alvéoles (3, 3').

Le pion (4) a la forme d'une alvéole. La pièce (5) est traversée longitudinalement par une tige (11) passant au centre de deux guides (12, 12').

La tige (11) qui peut se déplacer longitudinalement au travers des guides (12, 12') est équipée à une extrémité d'un ressort (15) situé entre la pièce (5) et le pion (4). La fonction du ressort (15) consiste à repousser la pièce (5) qui s'insère dans l'intervalle (8) pour maintenir l'élément fixe (A) dans le rail dans les axes x-x' et y-y'.

Pour libérer l'élément (A), il faut translater la tige (11) dans le sens opposé au travail du ressort (15) ce qui a pour effet de dégager la pièce (5) insérée dans l'intervalle (8) et la rapprocher de l'alvéole (3, 3') dans laquelle est insérée la pièce (4) qui peut être ainsi libérée.

L'élément (B) coulisse au moyen d'une gorge (2, 2') sur chacun de ses côtés qui reçoit la rainure (1, 1') située sur chacun des côtés de l'élément (A).

L'élément (B) est muni à une extrémité d'un ergot (6) située à distance du pion (7) telle que cette distance est égale à une demi distance entre deux alvéoles (3, 3').

Le pion (7) est escamotable. Ce pion est fait dans une matière pouvant réagir à un aimant. Le pion (7) est situé dans un puits borgne (16) non débouchant en partie supérieure de l'élément mobile (B).

Le pion (7), prisonnier du puits (16), peut se déplacer librement dans l'espace du puits.

Un ressort (17), situé entre l'extrémité borgne du puits (16) et la partie supérieure du pion (7) exerce une pression permanente afin d'éloigner le pion (7) de l'extrémité borgne du puits (16).

Bien que prisonnier du puits (16), le pion (7) dépasse de l'extrémité ouverte du puits (16) lorsqu'il est sous l'effet de pression du ressort (17).

Le dépassement du pion (7) de son logement a pour effet de bloquer l'élément mobile (B) dans une quelconque alvéole (3, 3').

Pour modifier la position de l'élément (B), il est nécessaire de faire remonter le pion (7) à l'intérieur du puits (16) pour extraire le pion (7) de l'alvéole (3, 3') afin de pouvoir réaliser la translation vers une autre alvéole permettant au pion (7) d'intégrer une alvéole quelconque (3, 3') et bloquer l'élément (B) à une position différente.

Pour éviter toute manipulation accidentelle ou malveillante, du changement de position de l'élément (B), voire du retrait de l'ensemble du dispositif de protection du rail, afin de le rendre inviolable et de garder l'élément (B) étanche aux agressions extérieures, la translation contraire à l'effort du ressort (17) se fait par l'apposition d'un aimant (18) dont la puissance permet de passer au travers d'une paroi constituée par l'extrémité borgne du puits (16), de contraindre la force du ressort (17) et de remonter le pion (7) vers l'extrémité borgne du puits.

L'élément (A) et l'élément (B) constituent des surfaces lisses sans aucune apparence de possibilité de démontage telle que vis, écrou ou lumière pour outil quelconque. Ces caractéristiques constituent une garantie contre toute malveillance, dégradation, accident domestique, encrassement empêchant le fonctionnement.

Le principe de fonctionnement du mécanisme décrit ci-dessus d'un aimant (18) associé aux surfaces lisses des éléments (A, B) garantit un très haut niveau de protection contre tout type d'agression.

La présence de l'aimant (18) permet d'opérer une translation à l'élément mobile (B) du dispositif de protection de rail.

Le retrait de l'aimant (18) rend le dispositif de protection de rail inamovible.

Le recouvrement du rail (R) par le dispositif de protection de rail assure une étanchéité au moyen de joint d'étanchéité (d1, d2, d3, d4) sur les bords latéraux des éléments (A, B).

L'ergot (6) collabore en permanence à la sécurisation du dispositif de protection de rail en liaison avec pion (7) qui, sous l'attraction de l'aimant (18), contraint le ressort (17), s'escamote dans le puits (16), à cet instant l'ergot (6) coulisse dans le rail (R), contraint la tige (11) qui déplace la pièce (5) vers une alvéole (3, 3') et permet la libération du dispositif de rail.

Pour le retrait du dispositif de protection de rail, la translation de l'élément (B) opérée au moyen de l'aimant (18) permet de chevaucher l'élément (A) jusqu'à le recouvrir complétement. Sous l'effet de l'aimant (18) le pion (7) s'extrait de l'alvéole (3, 3'), l'ergot (6) rentre en contact avec l'extrémité de la tige (11) et translate sur une distance d'un demi-pouce la tige (11) contraignant le ressort (15) qui translate la pièce (5) permettant ainsi la libération complète du dispositif de protection de rail.

Dans un souci de facilité d'emploi, les positions des alvéoles recouvertes par le dispositif de protection de rail peuvent être matérialisée sous une forme quelconque pouvant être une graduation (19, 19', 19")

Une matérialisation d'une graduation sur l'élément (B) informe l'utilisateur muni de l'aimant (18) afin de le guider sur le positionnement du puits (16) non apparent en partie supérieure de l'élément mobile (B).

Dans ce cas le dispositif de protection sert également de gabarit pour déterminer les intervalles souhaités.

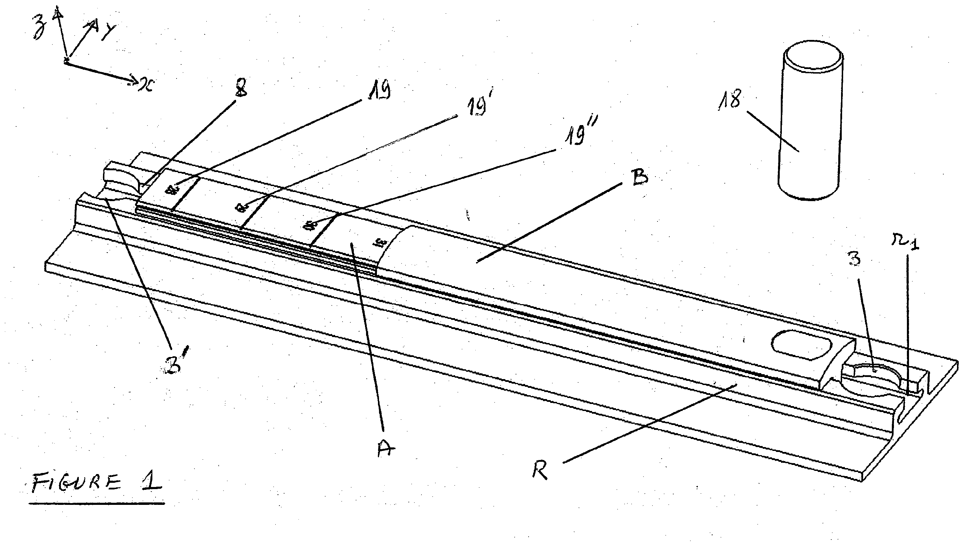

La Figure 1 représente le dispositif de protection déployé. Vue du dessus.

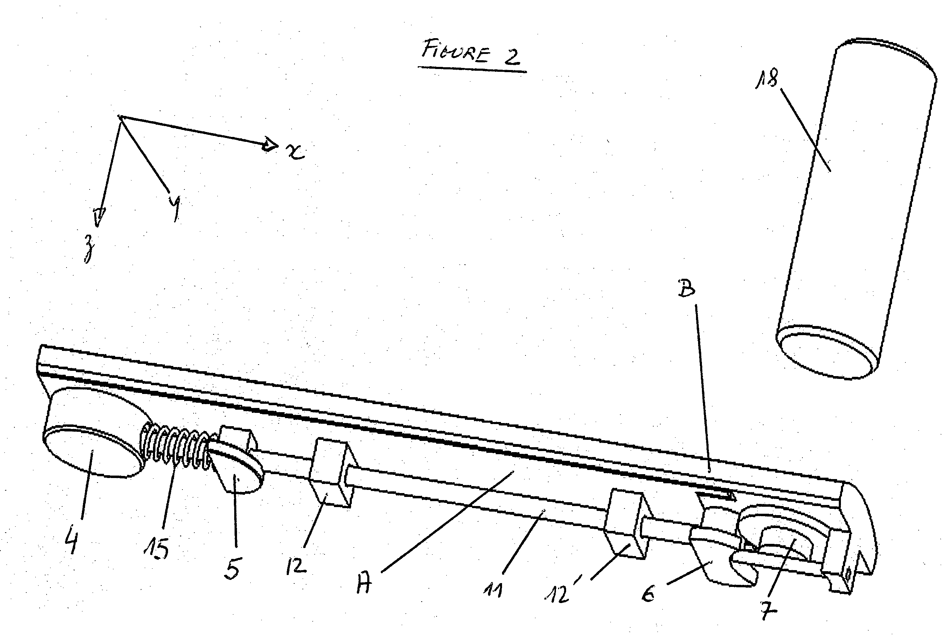

La Figure 2 représente le dispositif de protection non déployé ; Vue de dessous

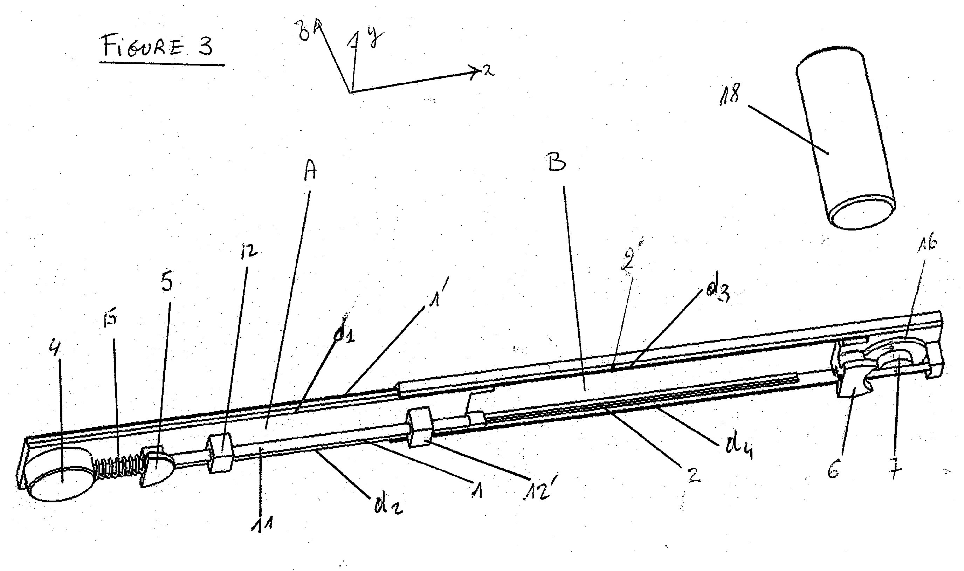

La Figure 3 représente le dispositif de protection déployé, Vue du dessous.

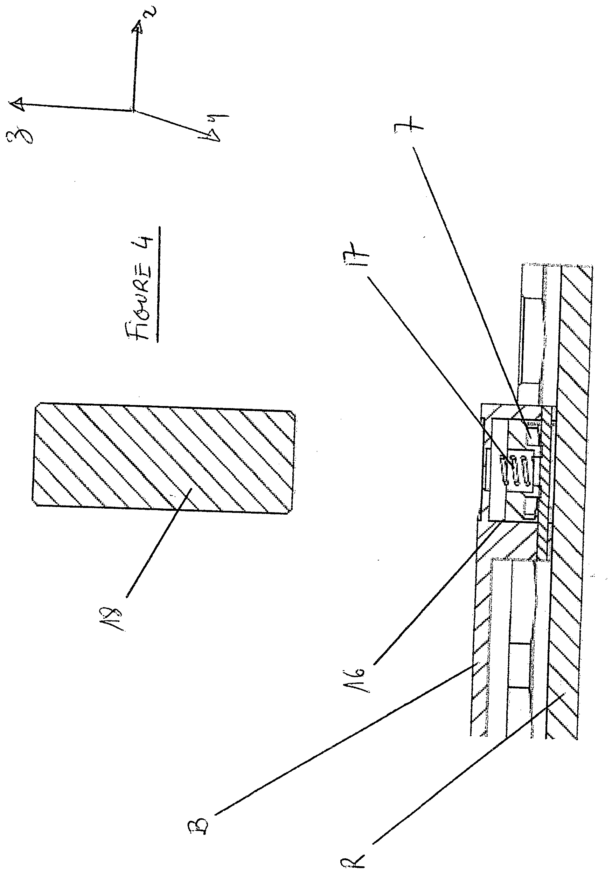

La Figure 4 représente une vue en coupe du pion (7), du puits (16), du ressort (17) et de l'aimant (18).

Dans une autre forme particulière de l'invention, l'élément fixe (A), est solidaire d'un élément coulissant (B) qui le recouvre en partie, l'élément fixe (A) s'insérant dans les glissières latérales () de l'élément coulissant (B). L'élément fixe (A) est relié à un équipement (E) au moyen d'une charnière (a1) située à une de ses extrémités, L'élément coulissant (B) est doté à l'une de ses extrémités d'un ergot (b1) qui se bloque dans l'équipement (E'). Les équipements (E, E') sont verrouillés dans le rail avion (R) selon un système de fixation qui leur est propre.

L'élément fixe (A) est équipé, sur sa face interne, d'un centreur (a2) qui s'insère dans la gorge du rail (R). Le centreur (a2) a pour fonction de maintenir en place le dispositif de protection de rail dans l'axe y-y'.

A l'autre extrémité de l'élément fixe (A), se trouve une fourchette à mémoire de forme (a3) fonctionnant dans l'axe des y-y' et munie de deux griffes (a4-a4') qui s'insèrent dans des encoches (b2-b2', b3-b3', b4-b4') à position graduée situées sur la face interne de l'élément coulissant (B).

Chaque encoche (b2-b2', b3-b3', b4-b4') correspond à une valeur de graduation (19, 19', 19").

La fourchette à mémoire de forme (a3) est pourvue de deux lèvres (a5, a5') qui, lorsqu'on les pince, permettent de rapprocher les griffes (a4- a4') qui se désengagent des encoches (b2-b2', b3-b3', b4-b4') et libèrent l'élément coulissant (B) par rapport à l'élément fixe (A) pour pouvoir le faire coulisser et l'amener à la valeur de graduation voulue puis insérer les griffes (a4-a4') dans les encoches correspondantes et ainsi adapter la longueur du dispositif de protection à la distance du rail (R) à protéger.

Pour régler la longueur du dispositif de protection de rail, il faut au préalable le faire pivoter autour de la charnière (a1) pour avoir accès à la fourchette à mémoire de forme (a3) et aux graduations (19, 19', 19").

Lorsque le dispositif de protection de rail est positionné dans le rail (R) après réglage de la distance souhaitée, il constitue un gabarit de positionnement pour l'équipement (E').

Dans cette forme particulière, le dispositif de protection de rail est toujours solidaire d'un équipement (E) et se verrouille dans le rail (R) lorsque l'ergot (b1) vient se bloquer dans un équipement (E').

Le recouvrement du rail (R) par le dispositif de protection de rail assure une étanchéité au moyen de joint d'étanchéité sur les bords latéraux des éléments (A, B).

Pour éviter toute manipulation accidentelle ou malveillante du changement de position de l'élément (B), la position de cet élément est ajustée à la longueur souhaitée comme décrit ci-dessus avant que les éléments (A, B) soient pivotés selon l'arc de cercle de la charnière (a1) et plaqués sur le rail (R) ; cette position étant sécurisée par l'élément (E') qui vient chevaucher et verrouiller l'ergot (b1). Le dispositif de protection de rail est ainsi maintenu en position dans le rail (R) au moyen des équipements (E, E') fixés dans le rail (R).

L'élément (A) et l'élément (B) constituent des surfaces lisses sans aucune apparence de possibilité de démontage telle que vis, écrou ou lumière pour outil quelconque. Ces caractéristiques constituent une garantie contre toute malveillance, dégradation, accident domestique, encrassement empêchant le fonctionnement.

Le principe de fonctionnement du mécanisme décrit ci-dessus d'un préréglage de la position de l'élément (B) par rapport à l'élément (A) et leur maintien en position verrouillé sur le rail (R) associé aux surfaces lisses des éléments (A, B) garantit un très haut niveau de protection contre tout type d'agression.

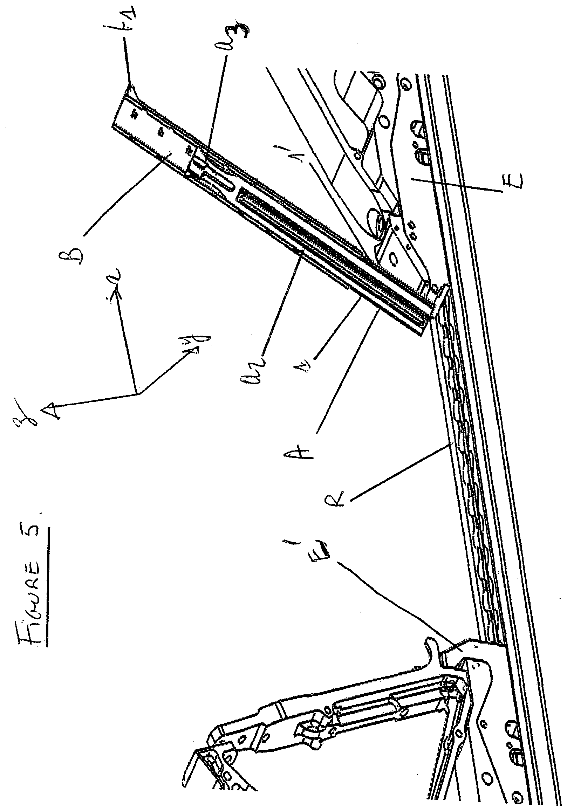

La Figure 5 représente le dispositif de protection de rail articulé à une extrémité par une charnière (a1) à un équipement (E). Le dispositif de protection de rail est en position de réglage de distance entre un équipement (E) et un équipement (E').

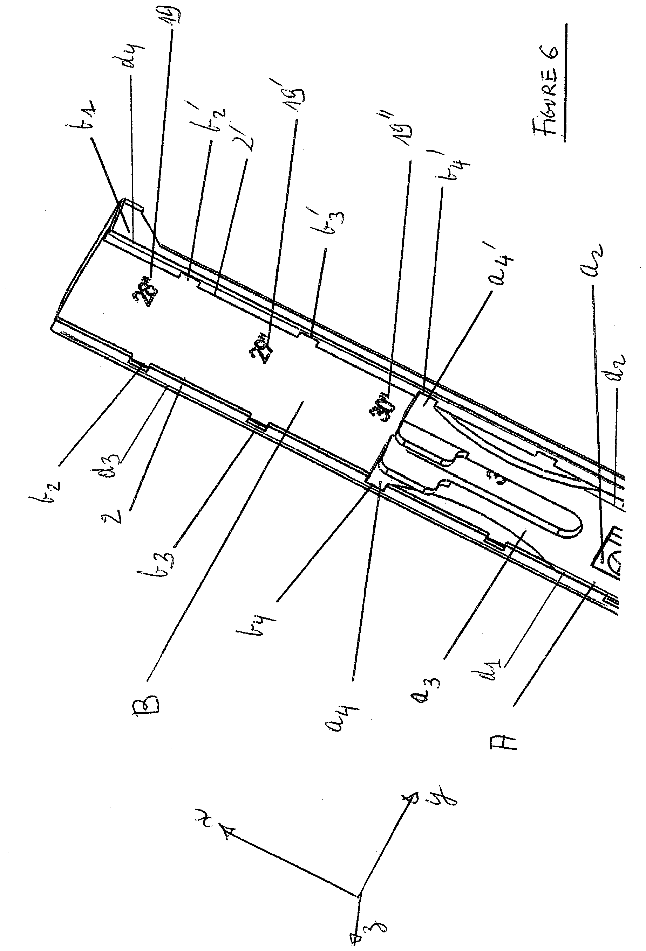

La Figure 6 est une vue de détail du dispositif de protection de rail.

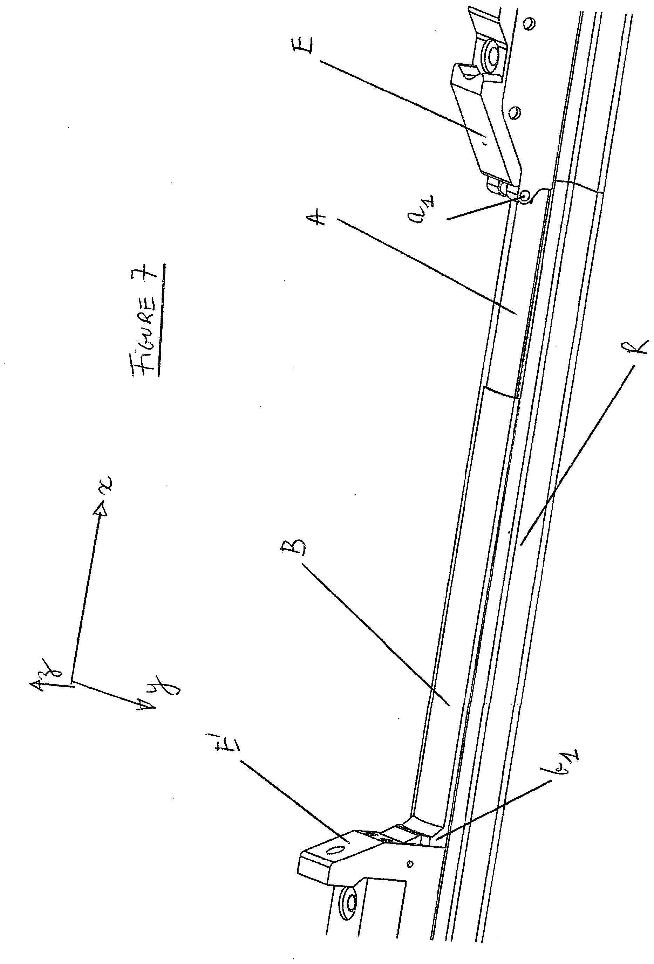

La Figure 7 représente le dispositif de protection de rail recouvrant le rail (R), étant articulé à de ses extrémités à un équipement (E) par une charnière (a1) et relié à l'autre extrémité à un autre équipement (E') par un ergot (b1).

## Revendications

1. Dispositif de protection de rail composé d'au moins deux éléments, solidaires l'un par rapport à l'autre, se déployant en liaison l'un avec l'autre, un des éléments étant doté d'au moins un élément adapté à être en contact avec la gorge (r1) du rail (R), l'un desdits éléments étant coulissant, par rapport à l'autre élément, de position de blocage graduée en position de blocage graduée à distance prédéterminée, **caractérisé en ce que** lesdits éléments coulissants sont gradués pour délivrer des informations relatives aux dimensions souhaitées et assurer un réglage avant d'être installés sur le rail.

2. Dispositif de protection de rail selon la revendication 1 **caractérisé en ce que** l'élément (A) est fixe et l'élément (B) est mobile coulissant par rapport à l'élément (A) au moyen d'une gorge (2, 2') sur chacun de ses côtés qui reçoit une rainure (1, 1') située sur chacun des côtés de l'élément (A), ledit dispositif étant doté d'au moins un point d'ancrage (̵4, 5, 6, 7) adapté à se verrouiller en un ou plusieurs endroits de la portion de rail (R) à protéger, de manière à s'insérer dans des alvéoles (3, 3') du rail (R).

3. Dispositif selon la revendication 2 **caractérisé en ce que** l'élément (A) est composé à une extrémité de sa partie inférieure d'un pion (4) adapté à s'insérer dans l'alvéole (3, 3') du rail (R) et d'une ou plusieurs pièces (5) adaptées à s'insérer dans l'intervalle (8) compris entre deux alvéoles (3, 3') du rail (R), le pion (4) ayant la forme d'une alvéole.

4. Dispositif selon la revendication 3 **caractérisé en ce que** la pièce (5) est traversée longitudinalement par une tige (11) passant au centre de deux guides (12, 12'), ladite tige (11) pouvant se déplacer longitudinalement au travers des guides (12, 12') et étant équipée à une extrémité d'un ressort (15) situé entre la pièce (5) et le pion (4), la fonction du ressort (15) consistant à repousser la pièce (5) adaptée à s'insérer dans l'intervalle (8) pour maintenir l'élément (A) dans le rail (R) selon les axes x-x' et y-y', l'élément (A) se libérant lorsque l'on translate la tige (11) dans le sens opposé au travail du ressort (15) ce qui a pour effet de dégager la pièce (5) insérée dans l'intervalle (8) et la rapprocher de l'alvéole (3, 3') dans laquelle est insérée la pièce (4) qui peut être ainsi libérée.

5. Dispositif selon la revendication 4 **caractérisé en ce que** l'élément (B) coulisse au travers d'une gorge (2, 2') sur chacun de ses côtés qui reçoit la rainure (1, 1') située sur chacun des côtés de l'élément (A).

6. Dispositif selon la revendication 5 **caractérisé en ce que** l'élément (B) est muni à une extrémité d'un ergot (6) située à distance d'un pion (7), le pion (7) étant escamotable.

7. Dispositif selon la revendication 6 **caractérisé en ce que** ledit pion (7) est réalisé dans une matière pouvant réagir à un aimant, le pion (7) étant situé dans un puits borgne (16) non débouchant en partie supérieure de l'élément (B), le pion (7), prisonnier du puits (16), pouvant se déplacer librement dans l'espace du puits, un ressort (17) situé entre l'extrémité borgne du puits (16) et la partie supérieure du pion (7) exerçant une pression permanente afin d'éloigner le pion (7) de l'extrémité borgne du puits (16), le pion (7) dépassant de l'extrémité ouverte du puits (16) lorsqu'il est sous l'effet de pression du ressort (17), le dépassement du pion (7) de son logement étant adapté à bloquer l'élément (B) dans une quelconque alvéole (3, 3') du rail (R), l'élément (B) étant déplacé par l'apposition et la translation d'un aimant (18) qui remonte le pion (7), l'extrait de l'alvéole (3), le translate et le place dans une autre alvéole (3'), le retrait de l'aimant (18) bloquant l'élément (B) dans une position différente, la présence de l'aimant (18) permettant d'opérer une translation de l'élément (B) vers une autre alvéole, le retrait de l'aimant (18) étant adapté à rendre le dispositif de protection de rail inamovible.

8. Dispositif de protection de rail selon la revendication 1 **caractérisé en ce qu'**il est composé d'un élément (A) qui est fixe par rapport à un équipement (E) fixé sur le rail (R), solidaire d'un élément (B) coulissant par rapport à l'élément (A) au travers d'une gorge (2, 2') sur chacun de ses côtés qui reçoit la rainure (1, 1') située sur chacun des côtés de l'élément (A) qui le recouvre en partie, et est doté de rainures latérales (1, 1') s'insérant dans les gorges latérales (2, 2') de l'élément (B),
l'élément (A) étant relié à l'équipement (E) au moyen d'une charnière (a1) située à une de ses extrémités,
l'élément (B) étant doté à l'une de ses extrémités d'un ergot (b1) qui se bloque dans un équipement (E'),
l'élément (A) étant pourvu, sur sa face interne, d'un centreur (a2) qui, s'insérant dans la gorge (r1) du rail (R), maintient en place le dispositif de protection de rail dans le rail (R) selon l'axe des y-y',
l'élément (A) étant muni d'une fourchette à mémoire de forme (a3) fonctionnant selon l'axe des y-y' nantie de deux griffes (a4, a4') s'insérant dans des encoches (b2-b2', b3-b3', b4-b4', b5-b5', b6-b6') à position déterminée situées sur la face interne de l'élément (B), chaque encoche (b2-b2', b3-b3', b4-b4', b5-b5', b6-b6') correspondant à une valeur de graduation (c2, c3, c4, c5, c6),
la fourchette à mémoire de forme (a3) étant dotée de deux lèvres (a5-a5') permettant, sous l'effet d'un pincement, de rapprocher les griffes (a4, a4') qui se désengagent des encoches (b2-b2', b3-b3', b4-b4', b5-b5', b6-b6') pour libérer l'élément (B), le translater à la graduation voulue, le relâchement des lèvres (a5-a5') permettant l'insertion des griffes (a4-a4') dans l'une des encoches (b2-b2', b3-b3', b4-b4', b5-b5', b6- b6').

9. Dispositif de protection de rail selon l'une des revendications 1 à 8 **caractérisé en ce qu'**il est doté de joints d'étanchéité (d1, d2, d3, d4) sur les faces internes desdits éléments (A, B).

10. Dispositif de protection de rail selon l'une des revendications 1 à 9 **caractérisé en ce que** les éléments (A, B) sont constitués de surfaces lisses associées à un mécanisme de réglage non apparent.

11. Dispositif de protection de rail selon l'une des revendications 1 à 10 **caractérisé en ce qu'**il est doté d'éléments (A, B) dont le mécanisme de fonctionnement permet son installation et sa désinstallation à volonté.

12. Dispositif de protection de rail selon l'une des revendications 1 à 11 **caractérisé en ce qu'**il est pourvu de marquage d'information.

## Patentansprüche

1. Schutzvorrichtung für Schienen, bestehend aus mindestens zwei einander zugeordneten Elementen, die miteinander verbunden verlaufen, wobei eines der Elemente mit mindestens einem Element versehen ist, das geeignet ist, in Kontakt mit der Nut (r1) der Schiene (R) zu sein, wobei eines der Elemente relativ zu dem anderem Element von einem abgestuften Anschlag zu einem abgestuften Anschlag in einem definierten Abstand verschiebbar ist, **dadurch gekennzeichnet, dass** die besagten, verschiebbaren Gleitelemente skaliert sind, um Informationen über die gewünschten Abmessungen zu liefern und die Einstellung vor der Installation auf der Schiene sicherzustellen.

2. Schutzvorrichtung für Schienen nach Anspruch 1, **dadurch gekennzeichnet, dass** das Element (A) feststehend ist und das Element (B) relativ zu dem Element (A) mittels einer Nut (2, 2') auf jeder seiner Seiten verschiebbar ist, die eine auf jeder Seite des Elements (A) vorgesehene Feder (1, 1') aufnimmt wobei die Vorrichtung mit mindestens einem Verankerungspunkt (4, 5, 6, 7) versehen ist, der geeignet ist, an einer oder mehreren Stellen des zu schützenden Abschnitts der Schiene (R) durch Einsetzen in Aufnahmen (3, 3') der Schiene (R) verriegelt zu werden.

3. Vorrichtung nach Anspruch 2, **dadurch gekennzeichnet, dass** das Element (A) an einem Ende seines unteren Teils aus einem stiftartigen Vorsprung (4), der dazu geeignet ist, in die Aufnahme (3, 3') der Schiene (R) eingesetzt zu werden, und aus einem oder mehreren Teilen (5) besteht, die in einen Spalt (8) zwischen zwei Aufnahmen (3, 3') der Schiene (R) eingesetzt werden können, wobei der stiftartige Vorsprung (4) die Form einer Aufnahme aufweist.

4. Vorrichtung nach Anspruch 3, **dadurch gekennzeichnet, dass** das Teil (5) in Längsrichtung von einer Stange (11) durchsetzt ist, die durch die Mitte zweier Führungen (12, 12') verläuft, wobei die Stange (11) in Längsrichtung über die Führungen (12, 12') beweglich ist und an einem Ende mit einer Feder (15) versehen ist, die zwischen dem Teil (5) und dem stiftartigen Vorsprung (4) angeordnet ist, wobei die Funktion der Feder (15) darin besteht, das Teil (5), das in den Spalt (8) einsetzbar ist, zurückzudrücken, um das Element (A) in der Schiene (R) entlang der Achsen x-x' und y-y' zu halten, wobei das Element (A) freigegeben wird, wenn die Stange (11) in der der Kraft der Feder (15) entgegengesetzten Richtung verschoben wird, was bewirkt, dass das in den Spalt (8) eingesetzte Teil (5) gelöst wird und sich der Aufnahme (3, 3'), in die das Teil (4) eingesetzt ist, nähert und somit freigegeben werden kann.

5. Vorrichtung nach Anspruch 4, **dadurch gekennzeichnet, dass** das Element (B) durch eine Nut (2, 2') an jeder seiner Seiten gleitet, die die Feder (1, 1') aufnimmt, die sich an jeder der Seiten des Elements (A) befindet.

6. Vorrichtung nach Anspruch 5, **dadurch gekennzeichnet, dass** das Element (B) an einem Ende mit einem stiftartigen Vorsprung (6) versehen ist, der in einem Abstand zu einem stiftartigen Vorsprung (7) angeordnet ist, wobei der stiftartige Vorsprung (7) einziehbar ist.

7. Vorrichtung nach Anspruch 6, **dadurch gekennzeichnet, dass** der stiftartige Vorsprung (7) aus einem Material hergestellt ist, das in der Lage ist, auf einen Magneten zu reagieren, wobei der stiftartige Vorsprung (7) in einer Blindvertiefung (16) angeordnet ist, die nicht durch den oberen Teil des Elements (B) verläuft, wobei der stiftartige Vorsprung (7), der in der Vertiefung (16) gehalten ist, sich frei in der Vertiefung bewegen kann und eine Feder (17), die zwischen dem blinden Ende der Vertiefung (16) und dem oberen Teil des stiftartigen Vorsprungs (7) angeordnet ist einen permanenten Druck ausübt, um den stiftartigen Vorsprung (7) vom blinden Ende der Vertiefung (16) wegzudrängen, wobei der stiftartige Vorsprung (7) aus dem offenen Ende der Vertiefung (16) herausragt, wenn er unter der Wirkung des Drucks der Feder (17) steht, wobei das Herausragen des Stiftes (7) aus seiner Aufnahme geeignet ist, das Element (B) in jeder Aufnahme (3, 3') der Schiene (R) zu verriegeln, wobei das Element (B) durch die Anordnung und Verschiebung eines Magneten (18) verschoben wird, der den Stift (7) anhebt, ihn aus der Aufnahme (3) herauszieht, ihn verschiebt und das Entfernen des Magneten (18) ihn in eine andere Aufnahme (3') setzt, was das Element (B) in einer anderen Position verriegelt, wobei das Vorhandensein des Magneten (18) eine Verschiebung des Elements (B) in Richtung einer anderen Aufnahme ermöglicht und das Entfernen des Magneten (18) geeignet ist, die Schienenschutzvorrichtung unbeweglich zu machen.

8. Schutzvorrichtung für Schienen nach Anspruch 1, **dadurch gekennzeichnet, dass** sie aus ein Element (A) umfasst, das relativ zu einer an der Schiene (R) befestigten Einrichtung (E) fest mit einem Element (B) verbunden ist, das relativ zu dem Element (A) durch eine Nut (2, 2') auf jeder seiner Seiten gleitet, die die Feder (1, 1') aufnimmt, die sich auf jeder der Seiten des Elements (A) befindet, das es teilweise überdeckt, und mit seitlichen Federn (1, 1'), die in die seitlichen Nuten (2, 2') des Elements (B) passen, wobei das Element (A) mit der Einrichtung (E) mittels eines an einem seiner Enden befindlichen Scharniers (a1) verbunden ist, wobei das Element (B) an einem seiner Enden mit einem stiftartigen Vorsprung (b1) versehen ist, der in die Einrichtung (E') einrastet wobei das Element (A) an seiner Innenseite mit einer Zentriervorrichtung (a2) versehen ist, die durch Einsetzen in die Nut (r1) der Schiene (R) die Schienenschutzvorrichtung in der Schiene (R) entlang der y-y'-Achse festhält, wobei das Element (A) mit einer Formgedächtnisgabel (a3) versehen ist, die entlang der y-y'-Achse arbeitet und zwei Klauen (a4, a4') aufweist, die in Aussparungen (b2-b2', b3-b3', b4-b4', b5-b5') an definierten Positionen an der Innenseite des Elements (B) eingreifen, wobei jede Aussparung (b2-b2', b3-b3', b4-b4', b5-b5', b6-b6') einer Schrittweite (c2, c3, c4, c5, c6) entspricht, wobei die Formgedächtnisgabel (a3) mit zwei Lippen (a5-a5') versehen ist, die es ermöglichen, unter der Wirkung einer Einklemmung die Klauen (a4, a4'), die aus den Aussparungen (b2-b2', b3-b3', b4-b4', b5-b5', b6-b6') ausrasten um das Element (B) freizugeben und es um die gewünschte Schrittweite zu verschieben, die Freigabe der Lippen (a5-a5'), die das Einsetzen der Klauen (a4-a4') in eine der Kerben (b2-b2', b3-b3', b4-b4', b5-b5', b6-b6') ermöglicht.

9. Schutzvorrichtung für Schienen nach einem der Ansprüche 1 bis 8, **dadurch gekennzeichnet, dass** sie mit Dichtungen (d1, d2, d3, d4) an den Innenflächen der Elemente (A, B) versehen ist.

10. Schutzvorrichtung für Schienen nach einem der Ansprüche 1 bis 9, **dadurch gekennzeichnet, dass** die Elemente (A, B) glatte Oberflächen bilden, die mit einem unsichtbaren Verstellmechanismus verbunden sind.

11. Schutzvorrichtung für Schienen nach einem der Ansprüche 1 bis 10, **dadurch gekennzeichnet, dass** sie mit Elementen (A, B) versehen ist, deren Betätigungsmechanismus es erlaubt, sie nach Belieben zu installieren und zu deinstallieren.

12. Schutzvorrichtung für Schienen nach einem der Ansprüche 1 bis 11, **dadurch gekennzeichnet, dass** sie mit Informationsmarkierungen versehen ist.

## Claims

1. A rail protection device made up of at least two elements, that are secured to each other, that are deployed in association with each other, one of the elements being provided with at least one element suitable for being in contact with the slot (r1) of the rail (R), one of said elements being slidable relative to the other element from a graduated blocking position to a graduated blocking position at a predetermined distance, **characterized in that** said sliding elements are graduated to provide information about the desired dimensions and to enable adjustment prior to being installed on the rail.

2. A rail protection device according to claim 1, **characterized in that** the element (A) is stationary and the element (B) is slidably movable relative to the element (A) by means of a groove (2, 2') on each of its sides which receives a spline (1, 1') situated on each of the sides of the element (A), the device being provided with at least one anchor point (4, 5, 6, 7) that is suitable for locking in one or more locations of the rail portion (R) to be protected, so as to become inserted in the recesses (3, 3') of the rail (R).

3. A rail protection device according to claim 2 **characterized in that** the element (A) is made up at one end of its bottom portion by a peg (4) that is suitable for being inserted in the recess (3, 3') of the rail (R) and by one or more parts (5) that are suitable for being inserted in the interval (8) that extends between two recesses (3, 3') of the rail (R), the peg (4) having the shape of a recess.

4. A rail protection device according to claim 3 **characterized in that** the part (5) has a rod (11) passing longitudinally therethrough and passing through the centers of two guides (12, 12'); the rod (11) being capable of moving longitudinally through the guides (12, 12') and being provided at one end with a spring (15) situated between the part (5) and the peg (4); the function of the spring (15) consisting in pushing back the part (5) suitable for being inserted in the interval (8) in order to hold the element (A) in the rail (R) along the axes x-x' and y-y'; the element (A) becoming released when the rod (11) is moved in translation in the opposite direction to the working direction of the spring (15), thereby having the effect of disengaging the part (5) inserted in the interval (8) and moving it towards the recesses (3, 3') in which the part (4) is inserted, which part can thus be released.

5. A rail protection device according to claim 4 **characterized in that** the element (B) slides by means of a groove (2, 2') on each of its sides receiving the spline (1, 1') situated on each of the sides of the element (A).

6. A rail protection device according to claim 5 **characterized in that** the element (B) is provided at one end with a stud (6) situated at a distance from a retractable peg (7).

7. A rail protection device according to claim 6 **characterized in that** the peg (7) is made of a material that can react to a magnet; the peg (7) being situated in a blind well (16) that does not open out into the top portion of the element (B); the peg (7), which is held captive in the well (16), being capable of moving freely in the base of the well; a spring (17) being situated between the blind end of the well (16) and the top portion of the peg (7) continuously exerting pressure in order to urge the peg (7) away from the blind end of the well (16); the peg (7) projecting from the open end of the well (16) when it is subjected to pressure from the spring (17); the peg (7) projecting from its housing serving to block the element (B) in any recess (3, 3') of the rail (R); the element (B) being moved by a magnet (18) being applied and moved in translation so as to raise the peg (7), extract it from the recess (3), move it in translation, and place it in another recess (3'); withdrawal of the magnet (18) leaving the element (B) blocked in a different position; the presence of the magnet (18) enabling the element (B) to be moved in translation along another recess; and withdrawal of the magnet (18) making the rail protection device non-removable.

8. A rail protection device according to claim 1, **characterized in that** it is made up of an element (A) that is stationary relative to an equipment (E) fastened to the rail (R), and secured to an element (B) that is slidable relative to the element (A) via a groove (2, 2') on each of its sides receiving the spline (1, 1') situated on each of the sides of the element (A) that covers it in part, is provided with lateral splines (1, 1') that become inserted in the lateral grooves (2, 2') of the element (B);
the element (A) being connected to a piece of equipment (E) by means of a hinge (a1) situated at one of its ends;
the element (B) being provided at one of its ends with a stud (b1) that becomes blocked in the piece of equipment (E');
the element (A) being provided on its inside face with a centralizer (a2) that, by becoming inserted in the slot (r1) of the rail (R), holds the rail protection device in place in the rail (R) on the y-y' axis;
the element (A) being provided with a shape memory fork (a3) operating on the y-y' axis and provided with two lugs (a4, a4') that become inserted in notches (b2-b2', b3-b3', b4-b4', b5-b5', b6-b6') at determined positions situated in the inside face of the element (B), each notch (b2-b2', b3-b3', b4-b4', b5-b5', b6-b6')corresponding to a graduation value (c2, c3, c4, c5, c6);
the shape memory fork (a3) provided with two lips (a5-a5') making it possible, under the effect of clamping, to move the lugs (a4, a4') towards each other so as to disengage them from the notches (b2-b2', b3-b3', b4-b4', b5-b5', b6-b6') in order to release the element (B), move it in translation to the desired graduation, with release of the lips (a5, a5') enabling the lugs (a4-a4') to be inserted into one of the notches (b2-b2', b3-b3', b4-b4', b5-b5', b6-b6').

9. A rail protection device according to any one of claims 1 to 8, **characterized in that** it is provided with sealing gaskets (d1, d2, d3, d4) on the inside faces of the elements (A, B).

10. A rail protection device according to claims 1 to 9, **characterized in that** the elements (A, B) are constituted by smooth surfaces associated with a non-apparent adjustment mechanism.

11. A rail protection device according to claims 1 to 10, **characterized in that** it is provided with elements (A, B) having an operating mechanism enabling it to be installed and removed at will.

12. A rail protection device according to claims 1 to 11, **characterized in that** it is provided with information marking.
